# EUROPEAN PATENT SPECIFICATION

(11) **EP 3 967 903 B1**
(45) Date of publication and mention of the grant of the patent: **06.09.2023**
(21) Application number: 20821582.2
(22) Date of filing: 17.02.2020
(51) Int. Cl.: F16H 59/54, F16H 63/50, F16H 61/02, F16H 61/682, F02D 29/00, B60W 10/04, B60W 10/11, F16H 63/40

(54) **STRADDLED VEHICLE**
GRÄTSCHSITZFAHRZEUG
VÉHICULE À SELLE

(30) Priority: 12.06.2019 JP 2019109279
(43) Date of publication of application: 16.03.2022
(73) Proprietor: Yamaha Hatsudoki Kabushiki Kaisha, Iwata-shi, Shizuoka 438-8501 (JP)
(72) Inventor: KOZU, Daisuke, Iwata-shi, Shizuoka 438-8501 (JP); IIZUKA, Shinya, Iwata-shi, Shizuoka 438-8501 (JP); IWAKI, Yohei, Iwata-shi, Shizuoka 438-8501 (JP); HARANO, Kazuya, Iwata-shi, Shizuoka 438-8501 (JP)
(74) Representative: Stöckeler, Ferdinand
(86) International application number: PCT/JP2020/006040
(87) International publication number: WO 2020/250487

(56) References cited:
- EP-A1- 3 842 309
- WO-A1-2018/216758
- WO-A1-2018/216758
- WO-A1-2019/013330
- DE-A1-102008 040 257
- JP-A- 2007 016 886

## Description

### Technical Field

The present invention relates to a straddled vehicle.

### Background Art

Straddled vehicles that run using power from a power source include a type of vehicle including a plurality of power transmission members that have backlash therebetween and that are engaged with each other to transmit power. Examples of such vehicles that are known include a straddled vehicle having a dog clutch. The dog clutch includes different types of dog elements as the power transmission members. The different types of dog elements include, for example, first dog elements and second dog elements that are engageable with each other. The first dog elements and the second dog elements are engaged with or disengaged from each other by moving relative to each other in a rotation axis direction. This switches the power between being transmitted and being disconnected. The first dog elements and the second dog elements in engagement have backlash therebetween in a circumferential direction. The backlash between the second dog elements and the first dog elements in the circumferential direction is set to a certain size that allows for smooth switching between power transmission and power disconnection.

In some cases where the driving state of the power source changes with an acceleration or a deceleration of the straddled vehicle, a shock can occur because of the backlash between the dog elements. For example, when the state of the power source is switched from a deceleration state (for example, engine braking activated state) to an acceleration state, each of the first dog elements that is located between the first contact element and the second contact element, which are two of the second dog elements adjacent to each other, sequentially: comes out of contact with the first contact element (non-transmission state), moves over a distance corresponding to the backlash while accelerating, and comes into contact with the second contact element (transmission state resulting from dog engagement); the first contact element is the second dog element located next to the first dog element at the rotational direction's start position, and the second contact element is the second dog element located next to the first dog element at the rotational direction's engagement position. That is, the angular momentum gained by the first dog elements in the non-transmission state increases due to the acceleration, while the state changes from the transmission state through the non-transmission state and back to the transmission state. In the transmission state, the power is transmitted, whereas in the non-transmission state, the power is not transmitted. As a result of the first and second dog elements recovering the contact therebetween, which allows the switching from the non-transmission state to the transmission state, the increased angular momentum is transmitted.

Consequently, the amount of change in output torque upon the recovered contact increases. This change in torque is transmitted to a drive wheel, eventually causing shock to the vehicle.

Patent Literature (PTL) 1, for example, discloses an acceleration/deceleration control device that reduces at least any of a transmission torque or a speed of contact between power transmission members when backlash between the power transmission members is lost upon an acceleration or a deceleration. This acceleration/deceleration control device gathers information on the rotation speed of an input shaft of a specific target part in a power transmission path, and computes a relative rotational position between the input shaft and an output shaft based on the information on the rotation speed. The acceleration/deceleration control device then accelerates or decelerates at least any of the input shaft or the output shaft to reduce at least any of the transmission torque or the speed of contact based on the computed relative rotational position. Thus, shock resulting from the backlash can be reduced. WO 2018/216758 A1 discloses a further control device of a straddled vehicle that reduces backlash between the power transmission members.

### Citation List

### Patent Literature

PTL 1: Japanese Patent No. 4722470

### Summary of Invention

### Technical Problem

A straddled vehicle has a braking device that applies braking force to a vehicle wheel. The straddled vehicle can change from a state in which the straddled vehicle is decelerating to a state in which the straddled vehicle is accelerating, with a change in state of the braking device. When the straddled vehicle is turning, the attitude of the straddled vehicle is controlled by increasing or reducing torque from a power source.

It is desired that, in the straddled vehicle, there is reduction in shock to the vehicle resulting from backlash between power transmission members thereof when the vehicle changes from a decelerating state to an accelerating state, with a change in state of the braking device.

It is an objective of the present invention to provide a straddled vehicle capable of reducing shock to the vehicle resulting from backlash between power transmission members thereof when the vehicle changes from a decelerating state to an accelerating state, with a change in state of a braking device. Solution to the Problem
(1) A straddled vehicle including:
   a vehicle wheel;
   a vehicle body supporting the vehicle wheel;
   a power source configured to output a torque for driving the vehicle wheel;
   a power transmission path configured to transmit the torque outputted from the power source to the vehicle wheel, the power transmission path including a first power transmission member and a second power transmission member configured to transmit power when in engagement with each other, the first power transmission member and the second power transmission member being configured to engage with each other in an acceleration position when the straddled vehicle is accelerating and engage with each other in a deceleration position differing from the acceleration position when the straddled vehicle is decelerating, the first power transmission member and the second power transmission member having backlash therebetween that allows the first power transmission member and the second power transmission member to move relative to each other from the acceleration position to the deceleration position;
   a braking device configured to apply braking force to the vehicle wheel; and
   a control device configured to control at least the power source to prevent the first power transmission member and the second power transmission member from being in the deceleration position during a period from a point before a switching time until a point after the switching time, the switching time being a time when the straddled vehicle is switched from a state in which the straddled vehicle is decelerating because of operation of the braking device to a state in which the straddled vehicle is accelerating using the torque being outputted from the power source along with the operation of the braking devicebeing discontinued.

The straddled vehicle having the configuration described above includes a vehicle wheel, a vehicle body, a power source, a power transmission path, a braking device, and a control device. The vehicle body supports the vehicle wheel. The power source outputs a torque for driving the vehicle wheel.

The power transmission path transmits the torque outputted from the power source to the vehicle wheel. The power transmission path includes a first power transmission member and a second power transmission member that transmit power when in engagement with each other. The first power transmission member and the second power transmission member engage with each other in an acceleration position when the straddled vehicle is accelerating and engage with each other in a deceleration position differing from the acceleration position when the straddled vehicle is decelerating. The first power transmission member and the second power transmission member have backlash therebetween that allows the first power transmission member and the second power transmission member to move relative to each other from the acceleration position to the deceleration position. The braking device applies braking force to the vehicle wheel.

The control device controls at least the power source to prevent the first power transmission member and the second power transmission member from being in the deceleration position during a period from a point before a switching time until a point after the switching time. The switching time is a time when the straddled vehicle is switched from a state in which the straddled vehicle is decelerating because of operation of the braking device to a state in which the straddled vehicle is accelerating using the torque being outputted from the power source along with the operation of the braking device being discontinued.

According to the configuration described above, the straddled vehicle is switched from the state in which the straddled vehicle is decelerating because of the operation of the braking device to the state in which the straddled vehicle is accelerating using the torque being outputted from the power source along with the operation of the braking device being discontinued. The first power transmission member and the second power transmission member are prevented from being in the deceleration position during the period from a point before the switching time to a point after the switching time. At the switching time when the straddled vehicle is switched to the state in which the straddled vehicle is accelerating using the torque being outputted from the power source along with the operation of the braking device being discontinued, therefore, the first power transmission member and the second power transmission member are not in the deceleration position. It is therefore possible to reduce shock on the straddled vehicle resulting from the backlash between the power transmission members upon the switching of the straddled vehicle to the accelerating state.

### (2) The straddled vehicle according to (1), wherein

the control device is configured to both, during the deceleration of the straddled vehicle due to the operation of the braking device, cause the power source to increase the torque and cause the braking device to generate the braking force, such that the first power transmission member and the second power transmission member are allowed to move to the acceleration position as the braking force of the braking device decreases, and
after the first power transmission member and the second power transmission member have reached the acceleration position, the control device causes the power source to further increase the torque to maintain the first power transmission member and the second power transmission member in the acceleration position.

According to the configuration described above, the power source increases the torque, so that the first power transmission member and the second power transmission member come out of the deceleration position in a short period of time. It is therefore possible to reduce shock to the vehicle resulting from the backlash between the power transmission members while improving responsiveness to switching of the straddled vehicle from the decelerating state to the accelerating state.

### (3) The straddled vehicle according to (1) or (2), wherein

the vehicle body turns while leaning, and leans in a leftward direction of the straddled vehicle while making a left turn and leans in a rightward direction of the straddled vehicle while making a right turn, and
when the vehicle body is turning while leaning, the control device controls at least the power source to prevent the first power transmission member and the second power transmission member from being in the deceleration position during the period from the point before the switching time until the point after the switching time, the switching time being a time when the straddled vehicle is switched from a state in which the straddled vehicle is decelerating because of operation of the braking device to a state in which the straddled vehicle is accelerating using the torque being outputted from the power source along with the operation of the braking device being discontinued.

When the straddled vehicle having the configuration described above is turning, the attitude of the straddled vehicle is controlled by increasing or reducing the torque from the power source. According to the configuration described above, it is possible to reduce shock to the vehicle resulting from the backlash between the power transmission members when the straddled vehicle is turning while leaning. According to the configuration described above, it is possible to optimize the decrease in shock on the vehicle in accordance with the turning state of the straddled vehicle.

### (4) The straddled vehicle according to (2) or (3), further comprising:

an output instruction part configured to output a torque instruction value for the torque to be outputted from the power source based on manipulation thereof by a rider of the straddled vehicle; and
a braking manipulation part configured to actuate the braking device based on manipulation thereof by the rider, wherein
the control device causes the power source to increase the torque while causing the braking device to apply braking force when the manipulation of the braking manipulation part is discontinued during the deceleration of the straddled vehicle.

According to the configuration described above, the power source increases the torque and the braking device continues to apply braking force when the manipulation of the braking manipulation part is discontinued. It is therefore possible to reduce shock to the vehicle resulting from the backlash between the power transmission members even when the manipulation of the braking manipulation part is discontinued.

### (5) The straddled vehicle according to (4), wherein

the control device causes the power source to increase the torque while causing the braking device to reduce the braking force when the manipulation of the braking manipulation part is discontinued during the deceleration of the straddled vehicle.

According to the configuration described above, the power source increases the torque and the braking device reduces the braking force when the manipulation of the braking manipulation part is discontinued. The amount of increase in the torque from the power source can be reduced depending on the amount of decrease in the braking force of the braking device. It is therefore possible to reduce shock to the vehicle resulting from the backlash between the power transmission members while restricting the output torque from the power source.

The terminology used herein is for defining particular embodiments only and is not intended to limit the invention which is defined by the scope of the appended claims. The present disclosure is to be considered as an exemplification of the present invention, and is not intended to limit the present invention to the specific embodiments illustrated by drawings or descriptions below.

The term "straddled vehicle" means a type of vehicle in which a driver straddles a saddle when seated. Examples of straddled vehicles include a lean vehicle. The vehicle is, for example, a motorcycle. No particular limitations are placed on the motorcycle, and examples thereof include scooters, mopeds, offroad motorcycles, and on-road motorcycles. The straddled vehicle is not limited to a motorcycle, and may be, for example, any vehicle such as an ATV (All-Terrain Vehicle). The term "vehicle" is not limited to a straddled vehicle and may be any vehicle such as a four-wheel automobile having a cabin. A vehicle may include transmission members having backlash therebetween. Such a vehicle is preferably configured to turn while leaning. The vehicle configured to turn while leaning is configured to turn along a curve with an attitude thereof leaning toward the center of the curve in order to counter centrifugal force exerted on the vehicle during the turn. The vehicle leans toward the center of the curve through manipulation (for example, weight shifting) by the driver. Due to the fact that the attitude of the vehicle is controlled by the driver, it is preferable that shock to the vehicle be reduced, and the vehicle has high acceleration and deceleration responsiveness. It is also preferable that the size and the weight of instruments and devices mounted on the vehicle be reduced. From this perspective, it is preferable that a stepped transmission in the vehicle provides high design flexibility. In the case of a transmission adopting a structure that can lead to a decrease in mechanical strength as described above, for example, maintaining the mechanical strength can require a size increase or reinforcement. This is one example in which the design flexibility is restricted by the structure of the stepped transmission. Restricted design flexibility can affect the size reduction and the weight reduction. By contrast, the present teaching can increase the design flexibility and is suitably applicable to vehicles configured to turn while leaning. In particular, in regard to a vehicle including transmission members having backlash therebetween, the present invention further improves the acceleration and deceleration responsiveness while reducing shock to the vehicle resulting from the backlash between the transmission members and accompanying a change in state of a power source, as described below. Since the attitude of a vehicle configured to turn while leaning is controlled by a driver thereof, the driver easily feels the behavior of the vehicle. It is therefore preferable that shock to be exerted on the vehicle configured to turn while leaning be reduced, and the vehicle has high acceleration and deceleration responsiveness. From this point of view, the present invention is suitable for vehicles configured to turn while leaning. Examples of vehicles configured to turn while leaning include straddled vehicles configured to turn while leaning (for example, motorcycles and three-wheeled vehicles).

In an example, a plurality of second power transmission members is arranged in a circle at an interval in a circumferential direction, and the interval is longer than a circumferential length of a plurality of first power transmission members. Each of the first power transmission members is disposed between adjacent two of the second power transmission members with a space between the first power transmission member and the adjacent two second power transmission members. Such a space is referred to as backlash (backlash between transmission members). When the state of the power source is switched from a deceleration state to an acceleration state, for example, the first power transmission member that is located between the two adjacent second power transmission members comes out of contact with one of the two second power transmission members, and then comes in contact with the other one, which is the opposite one, of the two second power transmission members. Thus, the first power transmission members and the second power transmission members are engaged with each other. A distance over which the first power transmission member moves away from the one of the two second power transmission members until the first power transmission member is engaged with the other one, which is the opposite one, of the two second power transmission members is the backlash.

The power transmission path including the first power transmission member and the second power transmission member is, for example, a transmission, a clutch, a chain, or a sprocket.

In a configuration in which first power transmission members and second power transmission members are used in a stepped transmission, for example, the first power transmission members are provided on either a driving gear or a driven gear. The second power transmission members are in contact with the first power transmission members in the circumferential direction with backlash therebetween. That is, the second power transmission members have a shape that provides backlash between the second power transmission members and the first power transmission members when each of the second power transmission members is located within a space between corresponding ones of the first power transmission members that are adjacent to each other in the circumferential direction. Furthermore, the second power transmission members move in the circumferential direction relative to the first power transmission members to come in contact with the first power transmission members in the circumferential direction. The second power transmission members may be provided on either the drive gear or the driven gear. Alternatively, the second power transmission members may be provided on a power transmission member ring, which is a different member from the drive gear and the driven gear. The first power transmission members or the second power transmission members may be protrusions or sidewall portions defining holes or grooves in which the other power transmission members are fitted. In a gear stage setting mechanism of the stepped transmission, gear stages are provided with the first power transmission members and the second power transmission members. However, this does not necessarily mean that the gear stage setting mechanism has a different set of first power transmission members and second power transmission members for each of the gear stages. The gear stage setting mechanism may have any configuration as long as the gear stage setting mechanism has the first power transmission members and the second power transmission members in a manner that mechanically and selectively enables power transmission in each of the gear stages. For example, one power transmission member ring serving as the second power transmission members may be provided for two gear stages.

The circumferential direction in which the first power transmission members and the second power transmission members are in contact with each other extends along a rotation direction of the drive gear or the driven gear on which the first power transmission members are provided.

Examples of power sources include an engine and an electric motor. That is, the straddled vehicle is, for example, an engine vehicle, an electric vehicle, or an engine-motor hybrid vehicle.

In the case of the power source being an engine, for example, power from the power source can be increased by increasing the volume of air being supplied to the engine. Alternatively or additionally, the power from the power source can be increased by increasing a fuel being supplied to the engine. For example, the power from the power source can be increased by increasing the fuel being supplied to the engine so that the amount of the fuel is greater than in a stoichiometry state.

Controlling the power source to prevent the first power transmission member and the second power transmission member from being in the deceleration position is, for example, controlling the power source to maintain the first power transmission member and the second power transmission member in the acceleration position. However, controlling the power source to prevent the first power transmission member and the second power transmission member from being in the deceleration position encompasses controlling the power source so that the first power transmission member and the second power transmission member are neither in the deceleration position nor in the acceleration position. When the first power transmission member and the second power transmission member are neither in the deceleration position nor in the acceleration position, the first power transmission member and the second power transmission member are out of contact with each other.

It is possible to further reduce shock on the straddled vehicle by controlling the power source to maintain the first power transmission member and the second power transmission member in the acceleration position.

When the control device increases the torque from the power source to maintain the first power transmission member and the second power transmission member in the acceleration position after the first power transmission member and the second power transmission member have moved to the acceleration position, the control device may, for example, maintain the torque from the power source constant. However, the control device is not limited as such and may, for example, vary the torque from the power source. For example, after the first power transmission member and the second power transmission member have moved to the acceleration position, the torque from the power source may be increased over time.

The braking device may stop applying braking force when the torque from the power source is increased to maintain the first power transmission member and the second power transmission member in the acceleration position after the first power transmission member and the second power transmission member have moved to the acceleration position. However, the braking device does not have to stop applying braking force when the torque from the power source is increased to maintain the first power transmission member and the second power transmission member in the acceleration position. The responsiveness to the torque increase by the power source is higher in a case where the braking device stops applying braking force when the torque from the power source is increased to maintain the first power transmission member and the second power transmission member in the acceleration position.

The braking device is, for example, a friction braking device that applies braking force to a vehicle wheel using frictional force. The braking device is not particularly limited, and may alternatively be, for example, a motor or a generator that applies braking force to a vehicle wheel using electromagnetic force instead of frictional force. The braking device does not have to be directly attached to or in contact with the vehicle wheel. In terms of a transmission direction, the braking device is located, for example, downstream of the first power transmission member and the second power transmission member in the transmission path that transmits the torque to a vehicle wheel.

The braking device applies, for example, braking force through manipulation of a braking operation element. The braking device is not particularly limited, and the braking force may be applied, for example, through an automatic control device of the straddled vehicle. The same applies to the power source. Regarding the switching time when the straddled vehicle is switched from the "state in which the straddled vehicle is decelerating because of operation of the braking device" (state A) to the "state in which the straddled vehicle is accelerating using the torque being outputted from the power source along with the operation of the braking device being discontinued" (state B), there may be an additional state between the state A and the state B. In this case, the switching time refers to a period from the end of the state A to the start of the state B. That is, the switching time does not necessarily have to be a single point of time, and may be a single period of time. The additional state is not particularly limited, and examples thereof include a state in which the operation of the braking device is not stopped and the straddled vehicle is accelerating using the torque being outputted from the power source. The state A may be a state in which the braking device is operating based on the rider's manipulation of the braking device (state A1), a state in which the braking device is operating without the rider's manipulation of the braking device (state A2), or a state including both the state A1 and the state A2. In the state A2, the braking device is controlled, for example, by the control device (automatic control device) as described above. Preferably, the straddled vehicle is in the state A2 at least at the end of the state A. Preferably, for example, the state A starts with the state A1, transitions from the state A1 to the state A2, and ends with the state A2. Referring to an embodiment described below, the state A starts if it is determined in step S12 that a braking operation is being performed. Since the braking operation involves braking manipulation, the state A starts with the state A1. Thereafter, the state A2 starts if it is determined in step S21 that the braking manipulation has been stopped and the control device has started adding additional braking force. That is, the state A transitions from the state A1 to the state A2. Thereafter, the control device finishes adding the additional braking force (Step S32) in response to an acceleration instruction being inputted (Step S31: YES). The state A then ends with the state A2, and the state B starts. Preferably, the power source is outputting the torque during at least a part of the period of the state A2 (period including the end of the state A2). Once the straddled vehicle has been switched from the state A2 to the state B, the power source outputs the torque based on the rider's acceleration manipulation. Before that, in the state A2, the power source preferably outputs torque independently of the rider's acceleration manipulation. This torque output by the power source is, for example, controlled by the control device (automatic control device) as mentioned above. As described above, during at least a part of the period of the state A2, the braking device may operate and the power source may output torque without the rider's braking manipulation and without the rider's acceleration manipulation. The braking device applies braking force to at least one of wheels of the vehicle. The braking device may apply, for example, braking force to a vehicle wheel that is different from the vehicle wheel to which the torque from the power source is supplied. Alternatively, the braking device may apply, for example, braking force to all of the vehicle wheels.

The operation of the braking device may be discontinued substantially simultaneously with the start of acceleration of the straddled vehicle using the torque being outputted from the power source. This is considered to be the case where the straddled vehicle is accelerating using the torque being outputted from the power source along with the operation of the braking device being discontinued. However, the operation of the braking device may be stopped before or after the start of acceleration of the straddled vehicle using the torque being outputted from the power source. This is also considered to be the case where the straddled vehicle is accelerating using the torque being outputted from the power source along with the operation of the braking device being discontinued.

Causing the braking device to keep applying braking force includes causing the braking device to maintain a magnitude of the braking force. However, causing the braking device to keep applying braking force also includes causing the braking device to change the braking force to a non-zero magnitude, and maintain the braking force.

When the control device causes the power source to increase the torque while causing the braking device to reduce the braking force, the amount of decrease in the braking force and the amount of increase in the torque may be equal. However, the amount of decrease in the braking force and the amount of increase in the torque do not have to be equal.

The control device may have a processor that executes a program or an electronic circuit.

### Advantageous Effects of Invention

According to the present invention, it is possible to provide a straddled vehicle capable of reducing shock to the vehicle resulting from backlash between power transmission members thereof when the vehicle changes from a decelerating state to an accelerating state, with a change in state of a braking device.

### Brief Description of Drawings

[FIG. 1] A diagram illustrating a straddled vehicle according to an embodiment of the present invention.
[FIG. 2] An external view of the straddled vehicle illustrated in FIG. 1.
[FIG. 3] A diagram illustrating a schematic configuration involved in driving and braking of the straddled vehicle illustrated in FIG. 2.
[FIG. 4(A)] A diagram illustrating a driven gear and a dog ring in a non-transmission state.
[FIG. 4(B)] A diagram illustrating the driven gear and the dog ring in a transmission state.
[FIG. 4(C)] A circumferential partial cross-sectional view of the driven gear and the dog ring in the transmission state.
[FIG. 5] A diagram illustrating a configuration of a control device illustrated in FIG. 3.
[FIG. 6] A flowchart showing an operation of the control device illustrated in FIG. 5.
[FIG. 7] A time chart showing an example of changes in state of each component of the straddled vehicle and torque.
[FIG. 8] A time chart showing an example of changes in state of each component and torque in a comparative example in which shock reducing process shown in FIG. 7 is not performed.
[FIG. 9] A time chart showing an example of changes in state of each component and torque in a second application example.

### Description of Embodiments

The following describes the present invention based on embodiments thereof with reference to the drawings.

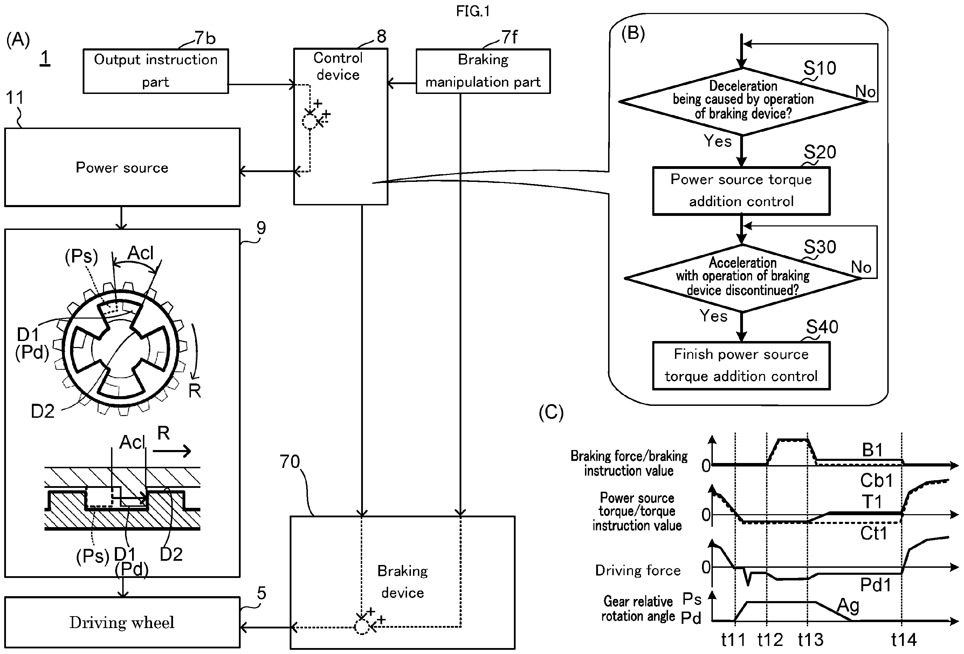

FIG. 1 is a diagram illustrating a straddled vehicle according to an embodiment of the present teaching. Part (A) of FIG. 1 is a block diagram illustrating a configuration of the straddled vehicle. Part (B) of FIG. 1 is a flowchart showing an operation of a control device. Part (C) of FIG. 1 is a time chart showing changes in state of each component and torque.

A straddled vehicle 1 illustrated in FIG. 1 includes a power source 11, a power transmission path 9, a vehicle wheel 5, a braking device 70, and a control device 8. The straddled vehicle 1 also includes an output instruction part 7b and a braking manipulation part 7f.

The power source 11 outputs a torque for driving the vehicle wheel 5. More specifically, the power source 11 outputs power including a torque and a rotation speed. The vehicle wheel 5 of the straddled vehicle 1 is supplied with the power outputted from the power source 11 and is driven by the power. The straddled vehicle 1 runs while being driven by the vehicle wheel 5.

The power transmission path 9 transmits the torque outputted from the power source 11 to the vehicle wheel 5. The power transmission path 9 has first power transmission members D1 and second power transmission members D2. The first power transmission members D1 and the second power transmission members D2 are, for example, dog elements that make dog engagement with each other.

The first power transmission members D1 and the second power transmission members D2 have backlash therebetween and are movable relative to each other. The first power transmission members D1 and the second power transmission members D2 illustrated in Part (A) of FIG. 1 have a backlash angle Acl therebetween.

The first power transmission members D1 and the second power transmission members D2 rotate in a rotation direction R when the straddled vehicle 1 is running.

The first power transmission members D1 and the second power transmission members D2 move relative to each other between an acceleration position Pd and a deceleration position Ps. The acceleration position Pd and the deceleration position Ps are relative positions of the first power transmission members D1 with respect to the second power transmission members D2. The first power transmission members D1 and the second power transmission members D2 are engaged with each other in the acceleration position Pd and in the deceleration position Ps. The first power transmission members D1 and the second power transmission members D2 are engaged with each other in the acceleration position Pd when the straddled vehicle 1 is accelerating. The first power transmission members D1 and the second power transmission members D2 are engaged with each other in the deceleration position Ps when the straddled vehicle 1 is decelerating.

The first power transmission members D1 and the second power transmission members D2 have a transmission state and a non-transmission state. In the transmission state, the first power transmission members D1 and the second power transmission members D2 are in engagement with each other. That is, in the transmission state, the first power transmission members D1 and the second power transmission members D2 are in engagement with each other in the acceleration position Pd or in the deceleration position Ps. The first power transmission members D1 and the second power transmission members D2 transmit power in the transmission state. In the non-transmission state, the first power transmission members D1 are out of contact with the second power transmission members D2. The first power transmission members D1 and the second power transmission members D2 do not transmit power in the non-transmission state.

The braking device 70 applies braking force to the vehicle wheel 5. The braking device 70 operates based on a rider's manipulation of the braking manipulation part 7f. For example, the braking device 70 increases the braking force based on an increase in the amount of manipulation of the braking manipulation part 7f. The braking device 70 reduces the braking force based on a decrease in the amount of manipulation of the braking manipulation part 7f.

However, the braking device 70 can operate independently of manipulation of the braking manipulation part 7f by being controlled by the control device 8. The control device 8 controls the braking device 70.

The braking device 70 operates, for example, through a pressure of a hydraulic fluid that is outputted from the braking manipulation part 7f in accordance with the rider's manipulation. The braking device 70 maintains, for example, a certain amount of pressure after the manipulation of the braking manipulation part 7f has been finished. Thus, the braking device 70 can increase the braking force to a higher value than a target value corresponding to the manipulation of the braking manipulation part 7f. That is, the braking device 70 can add additional braking force to the target value corresponding to the manipulation. In a configuration in which the braking device 70 includes a pump for the hydraulic fluid, for example, the braking device 70 can increase the braking force more aggressively relative to the target value corresponding to the manipulation.

The control device 8 controls the power source 11. The control device 8 controls power source torque. The power source torque refers to torque that is outputted from the power source 11. The control device 8 controls the output torque from the power source 11 based on a torque instruction value outputted from the output instruction part 7b being manipulated by the rider. For example, the control device 8 increases the torque being outputted from the power source 11 based on acceleration manipulation of the output instruction part 7b. The control device 8 reduces the torque being outputted from the power source 11 based on deceleration manipulation of the output instruction part 7b.

However, the power source 11 can operate independently of manipulation of the output instruction part 7b by being controlled by the control device 8.

The control device 8 can increase the output torque from the power source 11 to a higher value than a target torque value corresponding to the torque instruction value outputted from the output instruction part 7b. That is, the control device 8 can add additional output torque to the target value of the output torque from the power source 11 corresponding to the manipulation.

The time chart in Part (C) of FIG. 1 shows an example of changes in braking instruction value Cb 1, braking force B 1 of the control device 8, torque instruction value Ct1, power source torque T1 outputted from the power source 11, driving force Pd1 generated by the vehicle wheel 5, and gear relative rotation angle Ag. The gear relative rotation angle Ag is a relative angle between the first power transmission members D 1 and the second power transmission members D2.

First, in the example shown in Part (C) of FIG. 1, the torque instruction value Ct1 decreases around a time t11 due to the rider's manipulation. The power source torque T1 decreases as a function of the decreasing torque instruction value Ct1. As a result, the driving force Pd1 decreases. The driving force Pd1 falls to a negative value.

The power source 11 outputs a negative torque T1 as the power source torque T1. The negative torque is a deceleration torque in a direction for preventing rotation of a power shaft of the power source 11. In the case of the power source 11 being an engine, for example, the negative torque means a torque that is generated through a combustion operation of the power source 11 and that is smaller than force of rotational resistance of the power source 11 itself and force of rotational resistance being received by the power source 11 from any constituent located downstream of the power source 11. A negative torque and a negative power mean that the power source 11 is being driven as a load. That is, the power source 11 outputting a negative torque is driven by power from the vehicle wheel 5. The deceleration state refers to, for example, a state in which so-called engine braking is activated. In the deceleration state, the first power transmission members D 1 and the second power transmission members D2 receive, from the power source 11, a torque in a direction opposite to the rotation direction R.

At the time t11, the straddled vehicle 1 changes to a decelerating state. As the driving force Pd1 falls to a negative value, the first power transmission members D 1 and the second power transmission members D2 move from the acceleration position Pd to the deceleration position Ps. That is, the gear relative rotation angle Ag shown in Part (C) of FIG. 1 changes from the acceleration position Pd to the deceleration position Ps at the time t11.

At a time t12, the braking instruction value Cb1 increases through the rider's manipulation. The braking force B 1 of the control device 8 increases in accordance with the braking instruction value Cb 1.

After the time t12, the straddled vehicle 1 enters a state in which the straddled vehicle 1 is decelerating because of the operation of the braking device 70.

At a time t14 in Part (C) of FIG. 1, the straddled vehicle 1 is switched from the state in which the straddled vehicle 1 is decelerating because of the operation of the braking device 70 to a state in which the straddled vehicle 1 is accelerating using the power source torque T1 along with the operation of the braking device 70 being discontinued. The time t14 is referred to as a switching time.

During a period from a point before the switching time t14 until a point after the switching time t14, the control device 8 in the present embodiment controls the power source 11 to prevent the first power transmission members D1 and the second power transmission members D2 from being in the deceleration position Ps. For example, the control device 8 controls the power source 11 so that the first power transmission members D1 and the second power transmission members D2 are in the acceleration position Pd.

The following describes the foregoing operation with reference also to the flowchart in Part (B) of FIG. 1. The control device 8 determines whether or not deceleration is being caused by the operation of the braking device 70 (S10).

If deceleration is being caused by the operation of the braking device 70 (Yes in S10), the control device 8 controls the power source 11 to add additional power source torque to increase the power source torque T1 (S20). In the example shown in Part (C) of FIG. 1, after the deceleration has been caused by the operation of the braking device 70, the control device 8 controls the power source 11 to add additional power source torque to increase the power source torque T1 at a time t13 when the deceleration manipulation is finished.

This causes the power source torque T1 to increase at the time t13 in Part (C) of FIG. 1 independently of the torque instruction value Ct1.

As a result, the first power transmission members D1 and the second power transmission members D2 come into the acceleration position Pd.

Thereafter, the control device 8 determines whether or not the straddled vehicle 1 has been switched to the state in which the straddled vehicle 1 is accelerating using the power source torque T1 along with the operation of the braking device 70 being discontinued (S30). Upon determining that the straddled vehicle 1 has been switched to the accelerating state (Yes in S30), the control device 8 finishes the power source torque increase independent of the torque instruction value Ct1 (S40). As shown in Part (C) of FIG. 1, the torque instruction value Ct1 increases in accordance with manipulation at the time t14. The power source torque T1 therefore increases as increasing the torque instruction value Ct1.

According to the present embodiment, the first power transmission members D1 and the second power transmission members D2 are in the acceleration position Pd during the period from a point before the switching time t14 until a point after the switching time t14. That is, the first power transmission members D1 and the second power transmission members D2 are already in the acceleration position Pd at the time t14 when the straddled vehicle 1 is switched from the state in which the straddled vehicle 1 is decelerating to the state in which the straddled vehicle 1 is accelerating using the power source torque T1.

This prevents the first power transmission members D1 and the second power transmission members D2 from moving from the deceleration position Ps to the acceleration position Pd at the time when the straddled vehicle 1 is switched to the state in which the straddled vehicle 1 is accelerating using the power source torque T1. As a result, shock on the straddled vehicle 1 resulting from the backlash between the power transmission members D1 and D2 is reduced.

The following describes application examples in which the above-described embodiment is applied.

### [First Application Example]

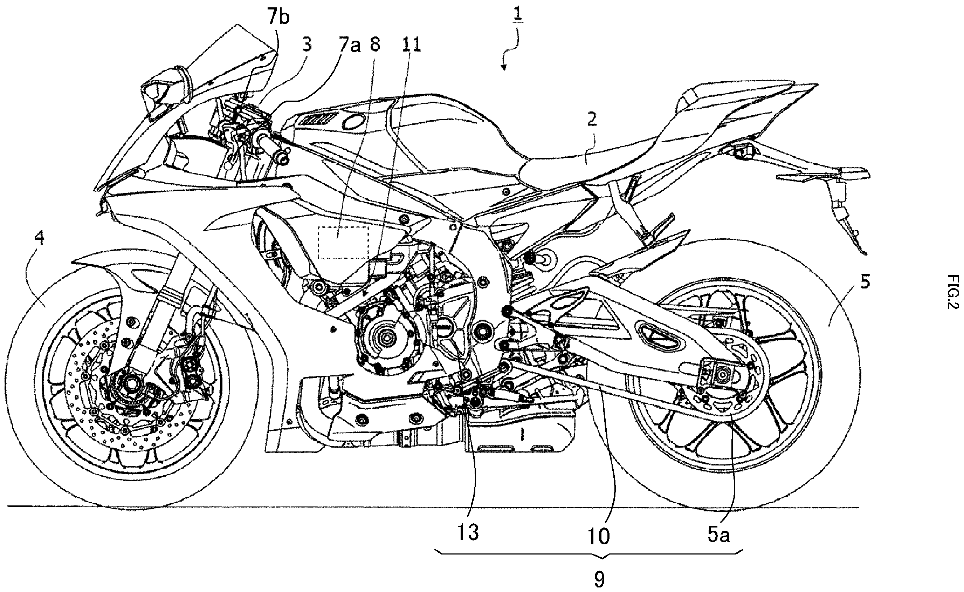

FIG. 2 is an external view of an application example of the straddled vehicle 1 according to the embodiment.

The straddled vehicle 1 illustrated in FIG. 2 is a lean vehicle. The straddled vehicle 1 turns while leaning. The straddled vehicle 1 leans in a leftward direction of the vehicle while making a left turn and leans in a rightward direction of the vehicle while making a right turn. The straddled vehicle 1 is a motorcycle.

The straddled vehicle 1 includes a vehicle body 2, the power source 11, vehicle wheels 4 and 5, the control device 8, and the power transmission path 9.

The vehicle body 2 supports the vehicle wheels 4 and 5. The control device 8 controls the torque that is outputted from the power source 11.

The straddled vehicle 1 also includes a handle 3 and the output instruction part 7b. The output instruction part 7b is provided on the handle 3 and is configured to be manipulated by a hand of a driver.

Of the vehicle wheels 4 and 5 illustrated in FIG. 2, the vehicle wheel 5, which is a rear wheel, is a drive wheel. The power source 11 outputs a torque for driving the vehicle wheel 5. The power transmission path 9 has a stepped transmission 13. The power transmission path 9 also has a drive chain 10 and a rear wheel driving sprocket 5a.

The power outputted from the power source 11 is transmitted to the stepped transmission 13. The power transmitted to the stepped transmission 13 is transmitted to the vehicle wheel 5 via the drive chain 10 and the rear wheel driving sprocket 5a.

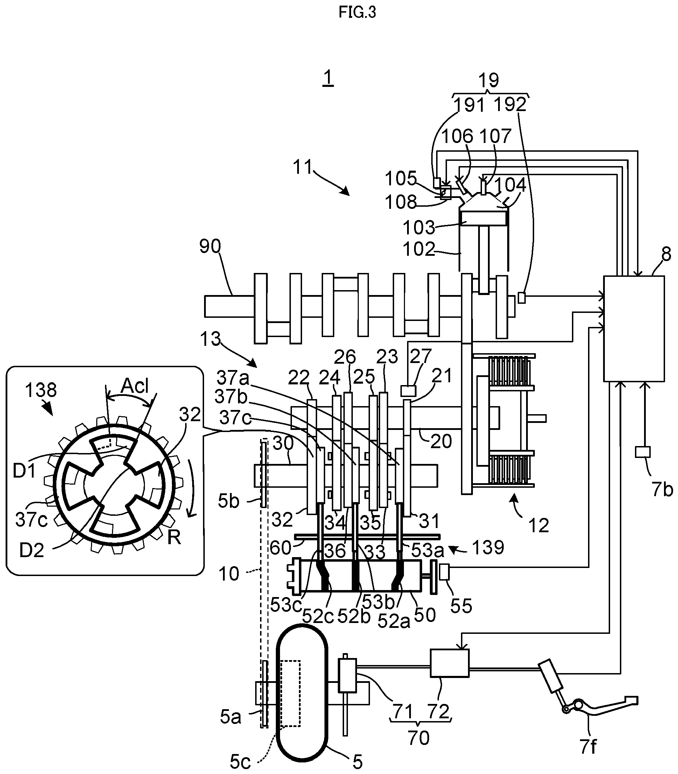

FIG. 3 is a diagram illustrating a schematic configuration involved in driving and braking of the straddled vehicle 1 illustrated in FIG. 2.

The power source 11 in the present application example is an engine. FIG. 1 shows a four-cylinder engine as the power source 11. The engine serving as the power source 11 is a four-stroke engine. In FIG. 1, a configuration of only one cylinder is schematically shown, and configurations of the remaining cylinders are not shown. The power source 11 includes a power shaft 90, a cylinder(s) 102, a piston(s) 103, and a spark plug(s) 107. The power shaft 90 is a crankshaft.

The piston 103 is disposed in the cylinder 102 in a reciprocable manner. The spark plug 107 is disposed in a combustion chamber 104 formed within the cylinder 102. An intake passage leads to the combustion chamber 104, and is provided with a throttle valve 105 and a fuel injector device 106. Operation of the throttle valve 105, the fuel injector device 106, and the spark plug 107 is controlled by the control device 8.

The throttle valve 105 adjusts the volume of air being supplied to the combustion chamber 104. The fuel injector device 106 supplies a fuel to the combustion chamber 104. A gas mixture containing the air and the fuel supplied to the combustion chamber 104 is ignited through the spark plug 107, and the resulting combustion causes the piston 103 to reciprocate. The reciprocating motion of the piston 103 is converted to rotation of the power shaft 90. The power source 11 outputs a torque of the power shaft 90.

The straddled vehicle 1 also includes a clutch 12, the stepped transmission 13, a torque detector 19, and a gear stage detector 55. The clutch 12 is provided between the power source 11 and the stepped transmission 13 in the torque transmission path. The clutch 12 connects or disconnects the power being transmitted between the power source and the stepped transmission 13. The clutch 12 connects or disconnects the power in accordance with the driver's manipulation.

The torque detector 19 detects the output torque from the power source 11. In the present application example, the torque detector 19 includes a power shaft speed detector 192.

In the straddled vehicle 1, the power generated by the power source 11 is normally transmitted in the following order: the power shaft 90, the clutch 12, an input shaft 20, a drive gear (21 to 26), a driven gear (31 to 36), a dog ring (37a to 37c), and an output shaft 30 of the stepped transmission 13, the drive chain 10, and the vehicle wheel 5. Hereinafter, a position of each component may be described as being upstream or downstream based on the direction of this power transmission flow.

The straddled vehicle 1 includes the braking manipulation part 7f and the braking device 70. The braking device 70 operates based on the rider's manipulation of the braking manipulation part 7f.

The braking device 70 has, for example, a brake caliper 71 and a brake solenoid valve 72. The braking manipulation part 7f supplies a pressure of the hydraulic fluid to the brake caliper 71 in accordance with the rider's manipulation. The braking manipulation part 7f also outputs a signal representing the rider's manipulation to the control device 8. The brake caliper 71 exerts, on the rotation of the vehicle wheel 5, frictional force corresponding to the pressure of the hydraulic fluid. Thus, the braking device 70 applies braking force to the vehicle wheel 5.

The brake solenoid valve 72 is controlled by the control device 8. By being controlled by the control device 8, the brake solenoid valve 72 can, for example, keep a braking force applying state in which the brake caliper 71 is applying braking force to the vehicle wheel 5, even after the manipulation of the braking manipulation part 7f has been finished. For example, the brake solenoid valve 72 holds the pressure outputted from the braking manipulation part 7f for a specific period of time even after the manipulation of the braking manipulation part 7f has been finished. The brake solenoid valve 72 can terminate the braking force applying state by being controlled by the control device 8. As described above, the control device 8 can control the braking device 70.

The stepped transmission 13 is connected to the clutch 12. The stepped transmission 13 has a plurality of gear stages. The stepped transmission 13 includes the input shaft 20, the output shaft 30, the drive gears (21 to 26), the driven gears (31 to 36), and a gear stage setting mechanism 139.

The input shaft 20 is rotatably disposed and receives input of the power. The power outputted from the power source 11 is inputted to the input shaft 20 via the clutch 12. The stepped transmission 13 changes the rotation speed of the output shaft 30 relative to the input shaft 20 in steps.

The output shaft 30 is rotatably disposed along an axis parallel to the input shaft 20. The plurality of drive gears (21 to 26) is provided on the input shaft 20 and is configured to always rotate with the input shaft 20. The plurality of drive gears (21 to 26) is in one-to-one correspondence with the plurality of gear stages. The plurality of driven gears (31 to 36) is provided on the output shaft 30 and are configured to be rotatable relative to the output shaft 30. Each of the plurality of driven gears (31 to 36) is configured to mesh with a corresponding one of the drive gears (21 to 26).

The gear stage setting mechanism 139 is configured to mechanically and selectively enable the power transmission from the input shaft 20 to the output shaft 30 through one of the drive gears (21 to 26) and the corresponding one of the driven gears (31 to 36) for a selected one of the gear stages.

The gear stage setting mechanism 139 has a backlash-involving dog engagement mechanism 138. The backlash-involving dog engagement mechanism 138 has first dog elements D1 as the first power transmission members and second dog elements D2 as the second power transmission members. That is, the straddled vehicle 1 includes the first dog elements D1 and the second dog elements D2.

The first dog elements D1 are an example of the first power transmission members D1. The second dog elements D2 are an example of the second power transmission members D2. The first power transmission members D1 are referred to below also as the first dog elements D1. The second power transmission members D2 are referred to below also as the second dog elements D2.

The backlash-involving dog engagement mechanism 138 mechanically and selectively enables either power transmission to any of the drive gears (21 to 26) through the input shaft 20 or power transmission from any of the driven gears (31 to 36) to the output shaft 30.

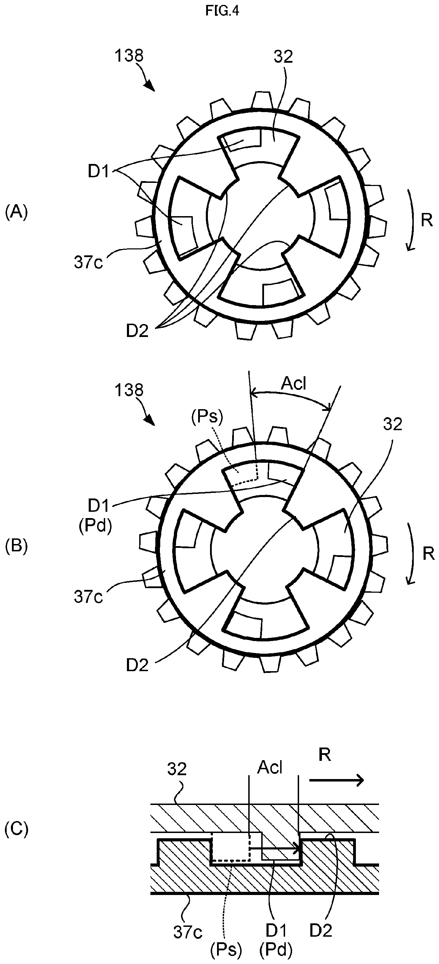

The first dog elements D1 (see FIG. 4) of the stepped transmission 13 are provided on the driven gears (31 to 36). The first dog elements D1 are a plurality of protrusions that are arranged on each of the driven gears (31 to 36) at intervals in a circumferential direction. The first dog elements D1 protrude in an axial direction of the output shaft 30 from the driven gears (31 to 36). The backlash-involving dog engagement mechanism 138 also includes the plurality of dog rings (37a to 37c). The second dog elements D2 are provided on each of the dog rings (37a to 37c). The second dog elements D2 are a plurality of protrusions that are arranged on each of the annular dog rings (37a to 37c) at intervals in the circumferential direction.

The dog rings (37a to 37c) are provided around the output shaft 30 and are movable along the axis of the output shaft 30. The dog rings (37a to 37c) are configured to always rotate with the output shaft 30. One of the dog rings (37a to 37c) is engaged with one of the driven gears (31 to 36) by moving along the axis of the output shaft 30. Specifically, the first dog elements D1 are fitted into spaces between the second dog elements D2 arranged at intervals, and the second dog elements D2 make contact with the first dog elements D1 in the circumferential direction. Thus, dog engagement that allows for the power transmission is established. The circumferential direction includes the rotation direction R of the driven gears (31 to 36) and the dog rings (37a to 37c). The power in the rotation direction R is transmitted as a result of the dog engagement.

FIG. 4(A) is a diagram illustrating the driven gear 32 and the dog ring 37c in the non-transmission state. FIG. 4(B) is a diagram illustrating the driven gear 32 and the dog ring 37c in the transmission state. FIG. 4(C) is a circumferential partial cross-sectional view of the driven gear 32 and the dog ring 37c in the transmission state. FIGS. 4(A) to 4(C) show the backlash-involving dog engagement mechanism 138 including the first dog elements D1 and the second dog elements D2.

FIGS. 4(A) to 4(C) show the driven gear 32 and the dog ring 37c corresponding to the second speed as an example of the driven gears (31 to 36) and an example of the dog rings (37a to 37c). However, basic structures of the driven gear 32 and the dog ring 37c are the same for the other gear stages.

The first dog elements D1 are a plurality of protrusions that are arranged on the driven gear 32 at intervals in the circumferential direction. The circumferential direction extends along the rotation direction R of the driven gear 32 and the dog ring 37c. The first dog elements D1 protrude from the driven gear 32 in the axial direction of the output shaft 30. By contrast, the second dog elements D2 are a plurality of protrusions that protrude toward the center. The second dog elements D2 form a plurality of recesses arranged at intervals in the circumferential direction on the dog ring 37c. The first dog elements D1 shown in FIGS. 4(A) to 4(C) are within the spaces between the second dog elements D2 arranged in the circumferential direction. The circumferential length of the spaces between the second dog elements D2 arranged in the circumferential direction is longer than the circumferential length of the first dog elements D1. The first dog elements D1 are within the spaces between the second dog elements D2 arranged in the circumferential direction, with a backlash fit. The first dog elements D 1 and the second dog elements D2 are configured to rotate relative to each other with the backlash therebetween.

Since the circumferential length of the spaces between the second dog elements D2 is longer than the circumferential length of the first dog elements D1, the first dog elements D1 are easily fitted into the spaces between the second dog elements D2 when the dog ring 37c moves in the axial direction toward the driven gear 32. Likewise, the first dog elements D1 are easily pulled out of the second dog elements D2 when the dog ring 37c moves in the axial direction away from the driven gear 32. This allows for smooth engagement and disengagement between the first dog elements D1 and the second dog elements D2 at times of upshifting and downshifting.

The rotation direction R shown in FIGS. 4(A) to 4(C) indicates a direction in which the driven gear 32 and the dog ring 37c rotate while the straddled vehicle 1 is running. The rotation direction R therefore indicates the direction of the torque being generated in the driven gear 32 during the acceleration state. The rotation direction R is also referred to as an acceleration direction R.

During the transmission state shown in FIG. 4(B), the torque is transmitted in the acceleration direction R from the first dog elements D1 to the second dog elements D2 through the dog engagement in which the first dog elements D1 are in contact with the second dog elements D2 in the circumferential direction. The first dog elements D1 and the second dog elements D2 are configured to enable the torque transmission by being engaged with each other.

The first dog elements D1 and the second dog elements D2 are engaged with each other in the acceleration position Pd and in the deceleration position Ps. The first dog elements D1 and the second dog elements D2 are engaged in the acceleration position Pd when the straddled vehicle 1 is accelerating. The first dog elements D1 and the second dog elements D2 are engaged in the deceleration position Ps when the straddled vehicle 1 is decelerating.

The first dog elements D1 and the second dog elements D2 are engaged with each other in the acceleration position Pd when the straddled vehicle 1 is accelerating. The first dog elements D1 and the second dog elements D2 are engaged with each other in the deceleration position Ps when the straddled vehicle 1 is decelerating.

With the first dog elements D1 and the second dog elements D2, the driven gear 32 rotates in the acceleration direction R, for example, when the power source 11 changes from the transmission state, in which the power source 11 is driven by power from the vehicle wheel 5, to the acceleration state, in which the power source 11 outputs a torque for acceleration, while the straddled vehicle 1 is decelerating. The driven gear 32 rotates relative to the dog ring 37c by the backlash angle Acl into a position shown in FIG. 4(B).

Specifically, the first dog elements D1 and the second dog elements D2 in engagement in the deceleration position Ps (dashed line in FIG. 4(B)) are disengaged from each other as illustrated in FIG. 4(A), and then are engaged with each other in the acceleration position Pd shown in FIG. 4 (B). Eventually, the dog engagement, in which the first dog elements D1 are in contact with the second dog elements D2 in the circumferential direction with the driven gear 32 in the position shown in FIG. 4(B), is established.

The power is transmitted in the acceleration direction R through the dog engagement in which the second dog elements D2 are in contact with the first dog elements D1 in the circumferential direction. As a result, the power for acceleration is transmitted from the input shaft 20 (see FIG. 3) to the output shaft 30 of the stepped transmission 13.

During a period until when the first and second dog elements D1 and D2 have been switched from the state shown in FIG. 4(A) to the state shown in FIG. 4(B), the rotation speed of the driven gear 32 increases because of the power for acceleration from the power source 11. During this period, the driven gear 32 is not engaged with the dog ring 37c, which is a driving target, and is therefore free of rotation resistance from the dog ring 37c. Consequently, the amount of increase in the rotation speed of the driven gear 32 is large.

Once the driven gear 32 rotating at the increased rotation speed has been engaged with the dog ring 37c, the angular momentum of the rotation of the driven gear 32 is transmitted to the dog ring 37c in addition to the output torque from the power source 11. That is, in addition to the output torque from the power source 11, inertia force from the driven gear 32 is transmitted from the first dog elements D1 to the second dog elements D2. The angular momentum transmitted from the driven gear 32 includes the angular momentum of the rotation of members located upstream of the driven gear 32 in the power transmission path. The angular momentum of the rotation of members located upstream of the driven gear 32 in the power transmission path includes, for example, the angular momentum of the rotation of the drive gear 22, the input shaft 20, the clutch 12, and the power shaft 90 (see FIG. 3). Consequently, when the state of the first dog elements D 1 and the second dog elements D2 is switched from the non-transmission state (FIG. 4(A)) to the transmission state (FIG. 4(B)), for example, an angular momentum greater than that caused by the rotation of the driven gear 32 by itself is transmitted in a short period of time. That is, a great angular momentum is transmitted from the driven gear 32 to the dog ring 37c in a short period of time.

The angular momentum transmitted to the dog ring 37c in a short period of time is transmitted from the output shaft 30 (see FIG. 3) of the stepped transmission 13 to the vehicle wheel 5 (see FIG. 2). In this case, impact is exerted on the power of the vehicle wheel 5. The impact on the power of the vehicle wheel 5 results in shock on the straddled vehicle 1.

In the present application example, the shock is reduced through the control by the control device 8.

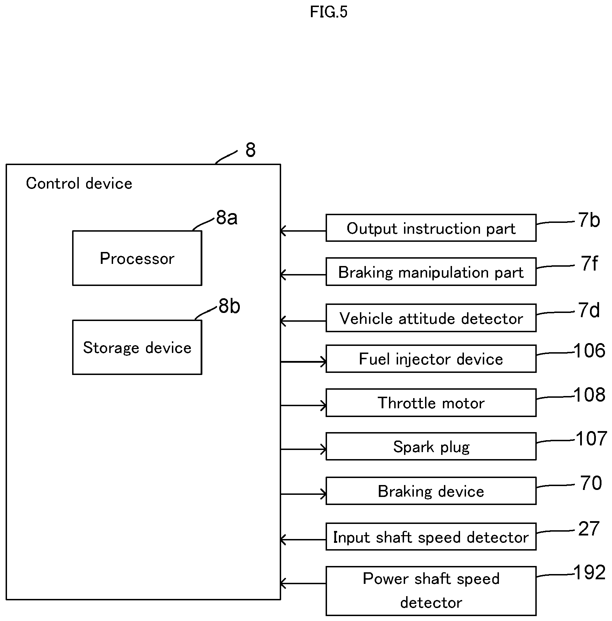

FIG. 5 is a diagram illustrating a configuration of the control device 8 illustrated in FIG. 3.

The control device 8 includes a processor 8a that executes a program and a storage device 8b that stores the program and data. The control device 8 controls the power source 11 and the braking device 70 through the processor 8a executing the program stored in the storage device 8b.

The output instruction part 7b, the braking manipulation part 7f, a vehicle attitude detector 7d, the fuel injector device 106, a throttle motor 108, the spark plug 107, and the braking device 70 are connected to the control device 8.

The output instruction part 7b (see FIG. 2) outputs an acceleration instruction value corresponding to the rider's manipulation. The braking manipulation part 7f outputs a braking state corresponding to the rider's manipulation. The vehicle attitude detector 7d detects and outputs an attitude of the straddled vehicle 1. The spark plug 107 is connected to the control device 8 via an ignition device, not shown.

The power shaft speed detector 192 and an input shaft speed detector 27 are also connected to the control device 8. The input shaft speed detector 27 detects information on the rotation speed of the input shaft 20. The vehicle attitude detector 7d is also connected to the control device 8.

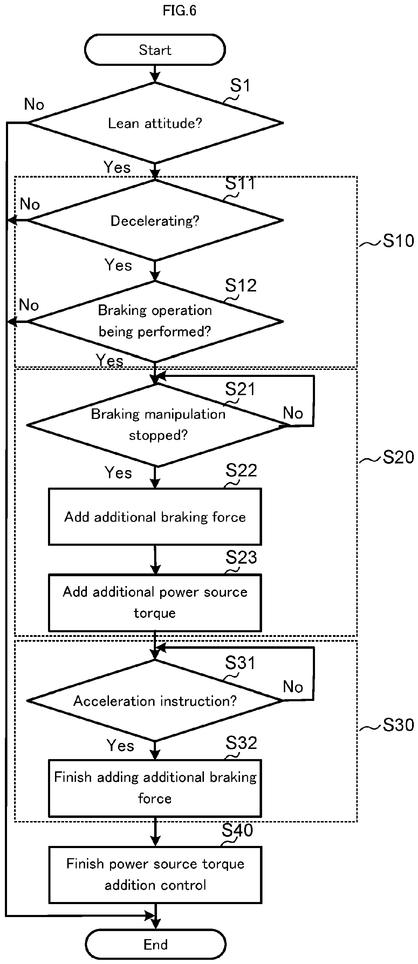

FIG. 6 is a flowchart showing an operation of the control device 8 illustrated in FIG. 5.

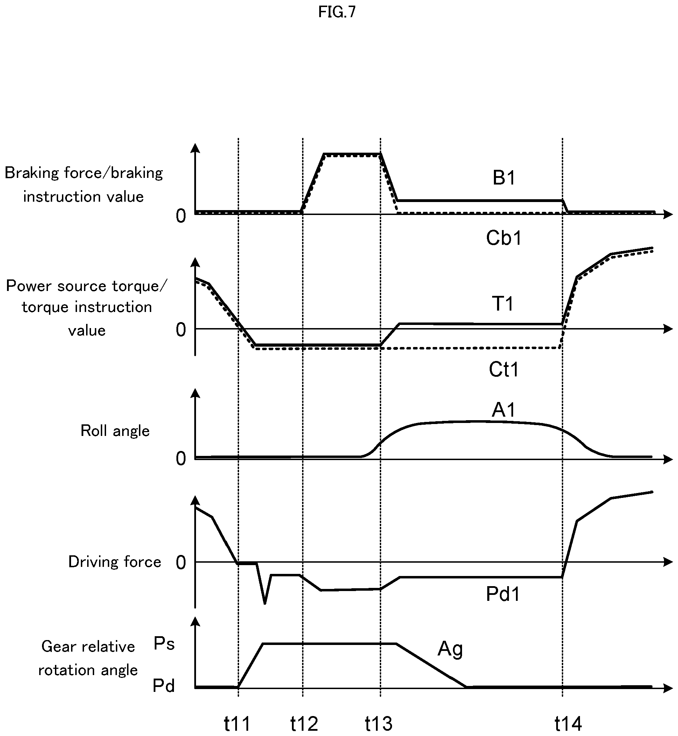

FIG. 7 is a time chart showing an example of changes in state of each component of the straddled vehicle 1 and torque.

The flowchart in FIG. 6 shows an application example of the operation described with reference to Part (B) of FIG. 1.

The time chart in FIG. 7 differs from that in Part (C) of FIG. 1 in that the former further shows a roll angle A1. In the example shown in FIG. 7, the acceleration manipulation of the output instruction part 7b of the running straddled vehicle 1 is discontinued before the time t11. The torque instruction value Ct1 then decreases.

The braking manipulation part 7f is manipulated at the time t12. The braking instruction value Cb1 then increases.

Thereafter, the straddled vehicle 1 turns while leaning. The roll angle A1 then increases.

The manipulation of the braking manipulation part 7f is discontinued at the time t13. The braking manipulation part 7f is manipulated at the time t12. Thereafter, the straddled vehicle 1 turns while leaning. The acceleration manipulation of the output instruction part 7b is resumed at the time t14.

Thereafter, the straddled vehicle 1 finishes leaning and turning.

The following describes the operation of the control device 8 and other components of the straddled vehicle 1 with reference to the flowchart in FIG. 6 and the example shown in FIG. 7.

The control device 8 determines whether or not the straddled vehicle 1 is turning while leaning (S1).

The control device 8 determines, for example, whether or not the lean angle detected by the vehicle attitude detector 7d is greater than a predetermined reference. If the straddled vehicle 1 is turning while leaning (Yes in S1), the control device 8 performs step S11 and subsequent steps.

In the example shown in FIG. 7, before the time t13, the roll angle A1 increases as the straddled vehicle 1 leans. If the roll angle A1 is greater than the value of the reference for the determination, the control device 8 determines that the straddled vehicle 1 is turning while leaning.

The control device 8 determines whether or not the straddled vehicle 1 is decelerating (S11). The control device 8 determines, for example, whether or not the straddled vehicle 1 is decelerating based on detection results of the power shaft speed detector 192. Another configuration may be adopted in which, for example, the rotation speed of the vehicle wheel 5 or the instruction value outputted from the output instruction part 7b is used to determine whether or not the straddled vehicle 1 is decelerating.

At the time t13 in FIG. 7, the torque instruction value Ct1 indicates that the output instruction part 7b is not being manipulated for acceleration.

Note that in the example shown in FIG. 7, the deceleration by the control device 8 is started before the time t13. In the example shown in FIG. 7, the first dog elements D 1 and the second dog elements D2 move from the acceleration position Pd to the deceleration position Ps when the power source torque T1 falls below 0 at the time t11.

At the moment when the first dog elements D1 and the second dog elements D2 are engaged with each other in the deceleration position Ps, torque impact is transmitted from the first dog elements D 1 to the second dog elements D2. This results in a negative shock on the driving force Pd1. However, as shown in FIG. 7, the straddled vehicle 1 is often not leaning during the deceleration of the straddled vehicle 1 (time t11, for example). Accordingly, the resulting change in the attitude of the straddled vehicle 1 due to the shock is small.

After the first dog elements D1 and the second dog elements D2 have been engaged with each other in the deceleration position Ps, the value of the driving force Pd1 remains negative at least until the time t14. That is, during this period, the straddled vehicle is decelerating.

The control device 8 determines whether or not the braking operation is being performed (S12). The control device 8 determines, for example, whether or not the braking operation is being performed based on the output of the braking manipulation part 7f. Another configuration may be adopted in which, for example, the control device 8 determines whether or not the braking operation is being performed based on the pressure received by the brake solenoid valve 72.

At the time t13 in FIG. 7, the braking instruction value Cb1 indicates that the braking operation is being performed based on the rider's manipulation. In this case, the control device 8 determines that the braking operation is being performed.

Through steps S11 and S12, that is, through step S10, it is detected whether or not deceleration is being caused by the operation of the braking device 70.

If deceleration is being caused by the operation of the braking device 70 (Yes in S11 and S12), the control device 8 controls the power source 11 to add additional power source torque to increase the power source torque T1 (S20). The detection that deceleration is being caused by the operation of the braking device 70 means that the straddled vehicle is in the state in which the straddled vehicle is decelerating because of the operation of the braking device.

The control device 8 determines whether or not the braking manipulation of the braking manipulation part 7f has been discontinued (S21).

Upon determining that the braking manipulation has been discontinued (Yes in S21), the control device 8 controls the power source 11 so that the first dog elements D1 and the second dog elements D2 move to the acceleration position Pd before the switching time when the straddled vehicle 1 is switched from the decelerating state to the accelerating state. The control device 8 causes the power source 11 to increase the torque while causing the braking device 70 to apply braking force when the manipulation of the braking manipulation part 7f is discontinued during the deceleration of the straddled vehicle.

More specifically, the control device 8 adds additional braking force to increase the braking force being applied by the braking device 70 (S22). That is, the control device 8 controls the braking device 70 so that the braking device 70 applies a braking force that is larger than the target value corresponding to the amount of manipulation of the braking manipulation part 7f. For example, the control device 8 causes the brake solenoid valve 72 to operate so that the pressure of the hydraulic fluid being supplied to the brake caliper 71 is maintained at an additional reference value even after the manipulation of the braking manipulation part 7f has been stopped. This is the state in which the braking device 70 is operating without the rider's manipulation of the braking device 70.

The control device 8 also increases the power source torque T1 (S23). For example, the control device 8 controls the throttle motor 108 so that a torque larger than the target value corresponding to the instruction value from the output instruction part 7b is outputted. In the example shown in FIG. 7, additional power source torque is added so that the power source torque T1 becomes a positive value.

More specifically, the control device 8 causes the power source 11 to gradually increase the torque while causing the braking device 70 to gradually reduce the braking force over time.

In the example shown in FIG. 7, the first dog elements D1 and the second dog elements D2 move from the deceleration position Ps to the acceleration position Pd when the power source torque T1 is increased through the addition after the time t13.

The control device 8 causes the power source 11 to increase the torque while causing the braking device 70 to reduce the braking force. More specifically, the control device 8 causes the power source 11 to gradually increase the torque while causing the braking device 70 to gradually reduce the braking force to the amount of the additional braking force. For example, the control device 8 causes the power source 11 to increase the torque depending on the reduction of the braking force of the braking device 70. As a result, even if the braking device 70 does not completely lose the braking force and the above-described additional braking force remains upon the braking manipulation being stopped, the straddled vehicle 1 has a speed change that is approximately equal to a speed change in a case where the braking device 70 completely loses the braking force due to the manipulation being stopped. In the example shown in FIG. 7, the torque from the power source 11 starts to increase at the time t13. The increase of the torque from the power source 11 is substantially in time with the reduction of the braking instruction value Cb 1. The behavior of the straddled vehicle 1 is therefore reflective of the rider's manipulation.

Furthermore, the first dog elements D1 and the second dog elements D2 readily move to the acceleration position Pd as a result of the control device 8 causing the power source 11 to increase the torque while causing the braking device 70 to reduce the braking force.

The control device 8 stops the application of the braking force while increasing the torque from the power source 11 to maintain the first dog elements D1 and the second dog elements D2 in the acceleration position Pd.

The control device 8 determines whether or not the straddled vehicle 1 is in the state in which the straddled vehicle 1 is accelerating using the power source torque T1 (S30). For example, the control device 8 determines whether or not the output instruction part 7b is outputting an instruction value for acceleration (S31).

If the straddled vehicle 1 is in the accelerating state (Yes in S31), the control device 8 finishes the braking force addition process. As a result of the braking force addition being finished, the straddled vehicle 1 can accelerate using the power source torque T1 in a short period of time.

At the time t14 in the example shown in FIG. 7, the instruction value from the output instruction part 7b indicates acceleration. In this case, the control device 8 determines that the straddled vehicle 1 is in the accelerating state. The control device 8 finishes the braking force addition.

While the braking force addition process is finished, the straddled vehicle 1 now accelerates in accordance with manipulation of the output instruction part 7b. This prevents the first dog elements D1 and the second dog elements D2 from returning to the deceleration position Ps.

If the straddled vehicle 1 is in the accelerating state (Yes in S31), the control device 8 finishes adding additional power source torque. That is, the control device 8 finishes the power source torque increase independent of the torque instruction value Ct1 (S40). The state in which the straddled vehicle 1 is decelerating because of the operation of the braking device 70 ends with the state in which the braking device 70 is operating without the rider's manipulation of the braking device 70. Upon the operation of the braking device 70 being stopped, the state in which the straddled vehicle 1 is accelerating using the torque being outputted from the power source is started.

The power source torque increase independent of the torque instruction value Ct1 is already finished. Even though the power source torque increase independent of the torque instruction value Ct1 has been finished, however, the torque instruction value Ct1 increases in accordance with manipulation. The power source torque T1 therefore increases as increasing the torque instruction value Ct1.

In the example shown in FIG. 7, the first dog elements D1 and the second dog elements D2 are in the acceleration position Pd during the period from a point before the switching time t14 and a point after the switching time t14. That is, the first power transmission members D1 and the second power transmission members D2 are in the acceleration position Pd at the time t14 when the straddled vehicle 1 is switched from the state in which the straddled vehicle 1 is decelerating to the state in which the straddled vehicle 1 is accelerating using the power source torque T1.

This prevents the first dog elements D1 and the second dog elements D2 from moving from the deceleration position Ps to the acceleration position Pd at the time of the switching to the state in which the straddled vehicle 1 is accelerating using the power source torque T1. As a result, shock to the driving force Pd1 resulting from the backlash between the power transmission members D1 and D2 is reduced. As a result, shock to the straddled vehicle 1 resulting from the backlash between the power transmission members D1 and D2 is reduced.

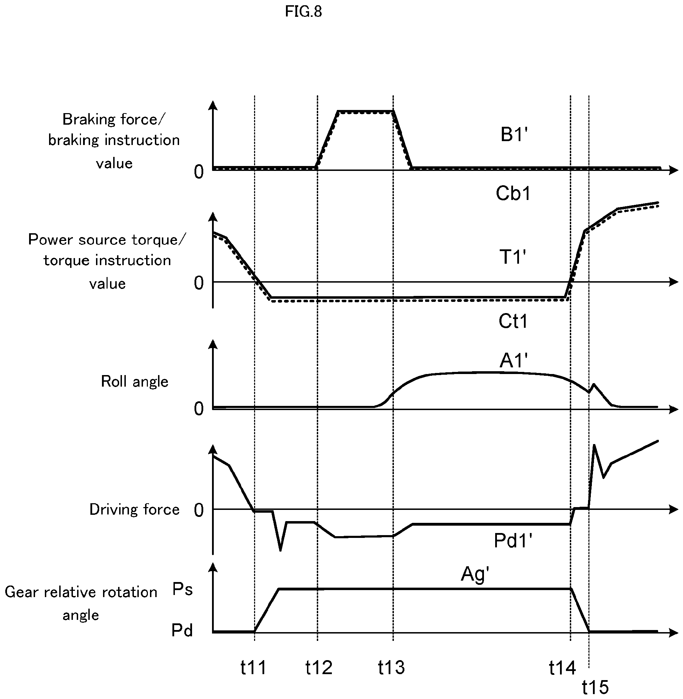

FIG. 8 is a time chart showing an example of changes in state of each component and torque in a comparative example in which the shock reducing process shown in FIG. 7 is not performed.

In the case of the comparative example shown in FIG. 8, the power source torque T1 is controlled in accordance with the torque instruction value Ct1. No additional torque is added to increase the power source torque T1 while the straddled vehicle 1 is decelerating. The first dog elements D1 and the second dog elements D2 therefore stay in the deceleration position Ps while the straddled vehicle 1 is decelerating. Specifically, the first dog elements D1 and the second dog elements D2 stay in the deceleration position Ps until the time t 14.

At the time t 14, a power source torque T1' increases as increasing the torque instruction value Ct1. At the time t14, the first dog elements D1 and the second dog elements D2 move from the deceleration position Ps to the acceleration position Pd because of the increase in the power source torque T1'. The first dog elements D1 and the second dog elements D2 move at a speed corresponding to the increase in the torque instruction value Ct1.

As a result, when the first dog elements D1 and the second dog elements D2 are engaged with each other in the acceleration position Pd (time t15 in FIG. 8), shock resulting from the backlash between the power transmission members D1 and D2 is exerted on a driving force Pd1'.

A roll angle A1' of the straddled vehicle 1 also changes due to the shock to the driving force Pd1' at the time t15 in FIG. 8. That is, the attitude of the straddled vehicle 1 changes.

By contrast, in the example in which the shock reducing process is performed as shown in FIG. 7, a shock on the driving force Pd1 and a shock on the straddled vehicle 1 are reduced.

### [Second Application Example]

At the time t13 when the control device 8 adds additional power source torque to increase the power source torque T1 in the application example described with reference to FIG. 7, the control device 8 adds additional power source torque to increase the power source torque T1 to a positive value.

The following describes a second application example in which the power source torque T1 is increased within a range of negative values.

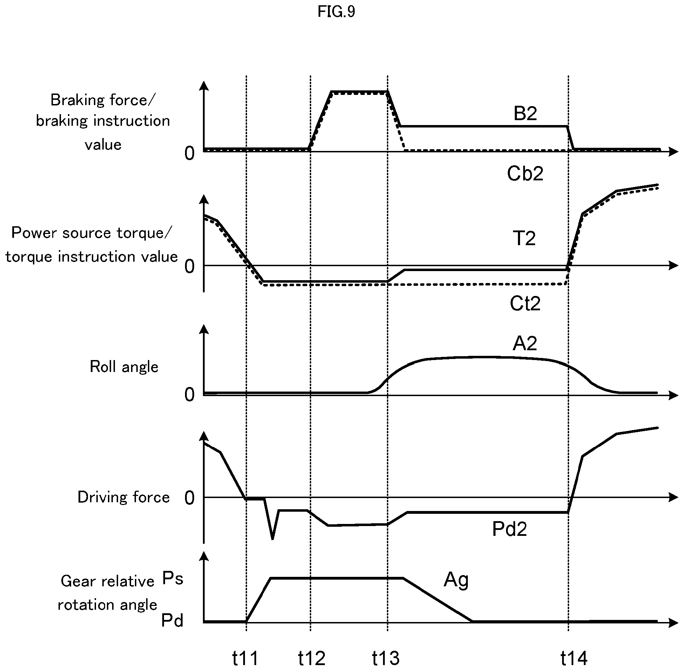

FIG. 9 is a time chart showing an example of changes in state of each component and torque in the second application example.

In the second application example shown in FIG. 9, the amount of power source torque that is added to the amount of a power source torque T2 corresponding to a braking instruction value Cb2 at the time t13 when a braking instruction value Cb2 decreases in accordance with the rider's manipulation is smaller than the counterpart in the application example shown in FIG. 7. The power source torque T2 after the addition is a negative value.

Furthermore, in the application example shown in FIG. 9, the amount of braking force that is added to the amount of a braking force B2 corresponding to a torque instruction value Ct2 at the time t13 when the braking instruction value Cb2 decreases in accordance with the rider's manipulation is also smaller than the counterpart in the application example shown in FIG. 7. The application example shown in FIG. 9 is otherwise the same as the application example shown in FIG. 7.

The first dog elements D1 and the second dog elements D2 move from the deceleration position Ps to the acceleration position Pd also in the second application example shown in FIG. 9. Thus, shock to the driving force Pd1 and shock to the straddled vehicle 1 are reduced.

The power source torque T2 is preferably greater than a value obtained by converting the braking force B2 resulting from the addition into a torque at the power source at a point later than the time t13 when the braking instruction value Cb2 decreases in accordance with the rider's manipulation. This makes it easier for the first dog elements D1 and the second dog elements D2 to move from the deceleration position Ps to the acceleration position Pd.

Furthermore, the power source torque T2 is preferably greater than a value obtained by converting the braking force B2 resulting from the addition and a running resistance of the straddled vehicle 1 into a torque at the power source 11 at a point later than the time t13 when the braking instruction value Cb2 decreases in accordance with the rider's manipulation. This makes it still easier for the first dog elements D1 and the second dog elements D2 to move from the deceleration position Ps to the acceleration position Pd.

### Reference Signs List

- 1: straddled vehicle
- 5: vehicle wheel
- 7b: output instruction part
- 7f: braking manipulation part
- 11: power source
- 70: braking device
- 8: control device
- 9: power transmission path
- 11: power source
- D1: first dog element (first power transmission member)
- D2: second dog element (second power transmission member)

## Claims

1. A straddled vehicle (1) comprising:
a vehicle wheel (5);
a vehicle body (2) supporting the vehicle wheel (5);
a power source (11) configured to output a torque for driving the vehicle wheel (5);
a power transmission path (9) configured to transmit the torque outputted from the power source (11) to the vehicle wheel (5), the power transmission path (9) including a first power transmission member (D1) and a second power transmission member (D2) configured to transmit power when in engagement with each other, the first power transmission member (D1) and the second power transmission member (D2) being configured to engage with each other in an acceleration position when the straddled vehicle (1) is accelerating and engage with each other in a deceleration position differing from the acceleration position when the straddled vehicle (1) is decelerating, the first power transmission member (D1) and the second power transmission member (D2) having backlash therebetween that allows the first transmission member and the second power transmission member (D2) to move relative to each other from the acceleration position to the deceleration position;
a braking device (70) configured to apply braking force to the vehicle wheel (5);
**characterised in that** the straddled vehicle comprises:
a control device (8) configured to control at least the power source (11) to prevent the first power transmission member (D1) and the second power transmission member (D2) from being in the deceleration position during a period from a point before a switching time until a point after the switching time, the switching time being a time when the straddled vehicle (1) is switched from a state in which the straddled vehicle (1) is decelerating because of operation of the braking device (70) to a state in which the straddled vehicle (1) is accelerating using the torque being outputted from the power source (11) along with the operation of the braking device (70) being discontinued, wherein
the control device (8) is configured to both, during the deceleration of the straddled vehicle (1) due to the operation of the braking device (70), cause the power source (11) to increase the torque and cause the braking device (70) to generate the braking force, such that the first power transmission member (D1) and the second power transmission member (D2) are allowed to move to the acceleration position as the braking force of the braking device (70) decreases, and
the control device (8) is configured to cause the power source (11) to further increase the torque to maintain the first power transmission member (D1) and the second power transmission member (D2) in the acceleration position after the first power transmission member (D1) and the second power transmission member (D2) have reached the acceleration position,
and the straddled vehicle (1) comprises:
an output instruction part (7b) configured to output a torque instruction value for the torque to be outputted from the power source (11) based on manipulation thereof by a rider of the straddled vehicle (1); and
a braking manipulation part (7f) configured to actuate the braking device (70) based on manipulation thereof by the rider,
wherein the control device (8) is configured to cause the power source (11) to increase the torque while causing the braking device (70) to apply braking force when the manipulation of the braking manipulation part (7f) is discontinued during deceleration of the straddled vehicle (1).

2. The straddled vehicle (1) according to claim 1, wherein
the vehicle body (2) is configured to turn while leaning, and to lean in a leftward direction of the straddled vehicle (1) while making a left turn and to lean in a rightward direction of the straddled vehicle (1) while making a right turn, and
when the vehicle body (2) is turning while leaning, the control device (8) is configured to control at least the power source (11) to prevent the first power transmission member (D1) and the second power transmission member (D2) from being in the deceleration position during the period from the point before the switching time until the point after the switching time, the switching time being a time when the straddled vehicle (1) is switched from a state in which the straddled vehicle (1) is decelerating because of operation of the braking device (70) to a state in which the straddled vehicle (1) is accelerating using the torque being outputted from the power source (11) along with the operation of the braking device (70) being discontinued.

3. The straddled vehicle (1) according to claim 1 or 2, wherein
the control device (8) is configured to cause the power source (11) to increase the torque while causing the braking device (70) to reduce the braking force when the manipulation of the braking manipulation part (7f) is discontinued during deceleration of the straddled vehicle (1).

## Patentansprüche

1. Ein Spreizsitzfahrzeug (1), das folgende Merkmale aufweist:
ein Fahrzeugrad (5);
einen Fahrzeugkörper (2), der das Fahrzeugrad (5) trägt;
eine Leistungsquelle (11), die konfiguriert ist, ein Drehmoment zum Antreiben des Fahrzeugrads (5) auszugeben;
einen Leistungsübertragungsweg (9), der konfiguriert ist, das Drehmoment, das aus der Leistungsquelle (11) ausgegeben wird, an das Fahrzeugrad (5) zu übertragen, wobei der Leistungsübertragungsweg (9) ein erstes Leistungsübertragungsbauglied (D1) und ein zweites Leistungsübertragungsbauglied (D2) umfasst, die konfiguriert sind, Leistung zu übertragen, wenn dieselben einander in Eingriff nehmen, wobei das erste Leistungsübertragungsbauglied (D1) und das zweite Leistungsübertragungsbauglied (D2) konfiguriert sind, einander in einer Beschleunigungsposition in Eingriff zu nehmen, wenn das Spreizsitzfahrzeug (1) beschleunigt, und einander in einer Verlangsamungsposition in Eingriff zu nehmen, die sich von der Beschleunigungsposition unterscheidet, wenn das Spreizsitzfahrzeug (1) verlangsamt, wobei das erste Leistungsübertragungsbauglied (D1) und das zweite Leistungsübertragungsbauglied (D2) zwischen einander Spiel aufweisen, das ermöglicht, dass das erste Übertragungsbauglied und das zweite Leistungsübertragungsbauglied (D2) sich von der Beschleunigungsposition zu der Verlangsamungsposition relativ zueinander bewegen;
eine Bremsvorrichtung (70), die konfiguriert ist, eine Bremskraft auf das Fahrzeugrad (5) auszuüben;
**dadurch gekennzeichnet, dass** das Spreizsitzfahrzeug folgende Merkmale aufweist:
eine Steuervorrichtung (8), die konfiguriert ist, zumindest die Leistungsquelle (11) zu steuern, um zu verhindern, dass sich das erste Leistungsübertragungsbauglied (D1) und das zweite Leistungsübertragungsbauglied (D2) in der Verlangsamungsposition befinden, während eines Zeitraums von einem Zeitpunkt vor einer Umschaltzeit bis zu einem Zeitpunkt nach dem Umschaltzeitpunkt, wobei der Umschaltzeitpunkt ein Zeitpunkt ist, wenn das Spreizsitzfahrzeug (1) von einem Zustand, in dem das Spreizsitzfahrzeug (1) aufgrund eines Betriebs der Bremsvorrichtung (70) verlangsamt, zu einem Zustand umgeschaltet wird, in dem das Spreizsitzfahrzeug unter Verwendung des Drehmoments, das aus der Leistungsquelle (11) ausgegeben wird, beschleunigt, während der Betrieb der Bremsvorrichtung (70) unterbrochen wird, wobei
die Steuervorrichtung (8) konfiguriert ist, während der Verlangsamung des Spreizsitzfahrzeugs (1) aufgrund des Betriebs der Bremsvorrichtung (70) zu veranlassen, dass die Leistungsquelle (11) das Drehmoment erhöht, und zu veranlassen, dass die Bremsvorrichtung (70) die Bremskraft derart erzeugt, dass das erste Leistungsübertragungsbauglied (D1) und das zweite Leistungsübertragungsbauglied (D2) sich zu der Beschleunigungsposition hin bewegen können, während sich die Bremskraft der Bremsvorrichtung (70) verringert, und
die Steuervorrichtung (8) konfiguriert ist, zu veranlassen, dass die Leistungsquelle (11) das Drehmoment weiter erhöht, um das erste Leistungsübertragungsbauglied (D1) und das zweite Leistungsübertragungsbauglied (D2) in der Beschleunigungsposition zu behalten, nachdem das erste Leistungsübertragungsbauglied (D1) und das zweite Leistungsübertragungsbauglied (D2) die Beschleunigungsposition erreicht haben, und
das Spreizsitzfahrzeug (1) folgende Merkmale aufweist:
ein Ausgabeanweisungsteil (7b), das konfiguriert ist, einen Drehmomentanweisungswert für das Drehmoment, das aus der Leistungsquelle (11) auszugeben ist, basierend auf einer Manipulation derselben durch einen Fahrer des Spreizsitzfahrzeugs (1) auszugeben; und
ein Bremsmanipulationsteil (7f), das konfiguriert ist, die Bremsvorrichtung (70) basierend auf einer Manipulation derselben durch den Fahrer zu betätigen,
wobei die Steuervorrichtung (8) konfiguriert ist, die Leistungsquelle (11) zu veranlassen, das Drehmoment zu erhöhen und gleichzeitig zu veranlassen, dass die Bremsvorrichtung (70) eine Bremskraft ausübt, wenn die Manipulation des Bremsmanipulationsteils (7f) während einer Verlangsamung des Spreizsitzfahrzeugs (1) unterbrochen wird.

2. Das Spreizsitzfahrzeug (1) gemäß Anspruch 1, bei dem
der Fahrzeugkörper (2) konfiguriert ist, abzubiegen und sich gleichzeitig zu neigen, und sich beim Linksabbiegen in einer Links-Richtung des Spreizsitzfahrzeugs (1) zu neigen, und sich beim Rechtsabbiegen in einer Rechts-Richtung des Spreizsitzfahrzeugs (1) zu neigen,
wenn der Fahrzeugkörper (2) abbiegt und sich gleichzeitig neigt, die Steuervorrichtung (8) konfiguriert ist, zumindest die Leistungsquelle (11) zu steuern, um zu verhindern, dass sich das erste Leistungsübertragungsbauglied (D1) und das zweite Leistungsübertragungsbauglied (D2) in der Verlangsamungsposition befinden, während des Zeitraums von dem Zeitpunkt vor dem Umschaltzeitpunkt bis zu dem Zeitpunkt nach dem Umschaltzeitpunkt, wobei der Umschaltzeitpunkt ein Zeitpunkt ist, wenn das Spreizsitzfahrzeug (1) von einem Zustand, in dem das Spreizsitzfahrzeug (1) aufgrund einer Operation der Bremsvorrichtung (90) verlangsamt, zu einem Zustand umgeschaltet wird, in dem das Spreizsitzfahrzeug (1) unter Verwendung des Drehmoments, das aus der Leistungsquelle (11) ausgegeben wird, beschleunigt, während der Betrieb der Bremsvorrichtung (70) unterbrochen wird.

3. Das Spreizsitzfahrzeug (1) gemäß Anspruch 1 oder 2, bei dem
die Steuervorrichtung (8) konfiguriert ist, zu veranlassen, dass die Leistungsquelle (11) das Drehmoment erhöht und gleichzeitig zu veranlassen, dass die Bremsvorrichtung (70) die Bremskraft reduziert, wenn die Manipulation des Bremsmanipulationsteils (7f) während einer Verlangsamung des Spreizsitzfahrzeugs (1) unterbrochen wird.

## Revendications

1. Véhicule à selle (1) comprenant:
une roue de véhicule (5);
une carrosserie de véhicule (2) supportant la roue de véhicule (5);
une source d'alimentation de puissance (11) configurée pour sortir un couple pour entraîner la roue de véhicule (5);
un trajet de transmission de puissance (9) configuré pour transmettre le couple sorti par la source d'alimentation de puissance (11) à la roue de véhicule (5), le trajet de transmission de puissance (9) comportant un premier élément de transmission de puissance (D1) et un deuxième élément de transmission de puissance (D2) configurés pour transmettre de la puissance lorsqu'ils sont en prise l'un avec l'autre, le premier élément de transmission de puissance (D1) et le deuxième élément de transmission de puissance (D2) étant configurés pour venir en prise l'un avec l'autre dans une position d'accélération lorsque le véhicule à selle (1) accélère, et en prise l'un avec l'autre dans une position de décélération qui diffère de la position d'accélération lorsque le véhicule à selle (1) décélère, le premier élément de transmission de puissance (D1) et le deuxième élément de transmission de puissance (D2) présentant entre eux un jeu qui permet que le premier élément de transmission de puissance et le deuxième élément de transmission de puissance (D2) se déplacent l'un par rapport à l'autre de la position d'accélération à la position de décélération;
un dispositif de freinage (70) configuré pour appliquer une force de freinage à la roue de véhicule (5);
**caractérisé par le fait que** le véhicule à selle comprend:
un dispositif de commande (8) configuré pour commander au moins la source d'alimentation de puissance (11) pour empêcher que le premier élément de transmission de puissance (D1) et le deuxième élément de transmission de puissance (D2) se trouvent dans la position de décélération pendant un laps de temps allant d'un point avant un moment de commutation à un point après le moment de commutation, le moment de commutation étant un moment où le véhicule à selle (1) est commuté d'un état dans lequel le véhicule à selle (1) décélère du fait de l'actionnement du dispositif de freinage (70) à un état dans lequel le véhicule à selle (1) accélère à l'aide du couple sorti par la source d'alimentation de puissance (11) ensemble avec **le fait que** l'actionnement du dispositif de freinage (70) est interrompu,
dans lequel
le dispositif de commande (8) est configuré tant pour amener, pendant la décélération du véhicule à selle (1) du fait de l'actionnement du dispositif de freinage (70), la source d'alimentation de puissance (11) à augmenter le couple que pour amener le dispositif de freinage (70) à générer la force de freinage, de sorte qu'il soit permis que le premier élément de transmission de puissance (D1) et le deuxième élément de transmission de puissance (D2) se déplacent vers la position d'accélération au fur et à mesure que diminue la force de freinage du dispositif de freinage (70), et
le dispositif de commande (8) est configuré pour amener la source d'alimentation de puissance (11) à augmenter davantage le couple pour maintenir le premier élément de transmission de puissance (D1) et le deuxième élément de transmission de puissance (D2) dans la position d'accélération après que le premier élément de transmission de puissance (D1) et le deuxième organe de transmission de puissance (D2) ont atteint la position d'accélération,
et le véhicule à selle (1) comprend:
une partie d'instruction de sortie (7b) configurée pour sortir une valeur d'instruction de couple pour le couple à sortir de la source d'alimentation de puissance (11) sur base de la manipulation de ce dernier par un conducteur du véhicule à selle (1), et
une partie de manipulation de freinage (7f) configurée pour actionner le dispositif de freinage (70) sur base de la manipulation de ce dernier par le conducteur,
dans lequel le dispositif de commande (8) est configuré pour amener la source d'alimentation de puissance (11) à augmenter le couple tout en amenant le dispositif de freinage (70) à appliquer une force de freinage lorsque la manipulation de la partie de manipulation de freinage (7f) est interrompue pendant la décélération du véhicule à selle (1).

2. Véhicule à selle (1) selon la revendication 1, dans lequel
la carrosserie de véhicule (2) est configurée pour tourner tout en s'inclinant, et pour s'incliner dans une direction vers la gauche du véhicule à selle (1) tout en effectuant un virage à gauche et pour s'incliner dans une direction vers la droite du véhicule à selle (1) tout en effectuant un virage à droite, et
lorsque la carrosserie de véhicule (2) vire tout en s'inclinant, le dispositif de commande (8) est configuré pour commander au moins la source d'alimentation de puissance (11) pour empêcher que le premier élément de transmission de puissance (D1) et le deuxième élément de transmission de puissance (D2) ne se situent dans la position de décélération pendant le laps de temps allant du point avant le moment de la commutation au point après le moment de commutation, le moment de commutation étant un moment où le véhicule à selle (1) est commuté d'un état dans lequel le véhicule à selle (1) décélère du fait de l'actionnement du dispositif de freinage (70) à un état dans lequel le véhicule à selle (1) accélère à l'aide du couple sorti par la source d'alimentation de puissance (11) ensemble avec le fait que l'actionnement du dispositif de freinage (70) est interrompu.

3. Véhicule à selle (1) selon la revendication 1 ou 2, dans lequel
le dispositif de commande (8) est configuré pour amener la source d'alimentation de puissance (11) à augmenter le couple tout en amenant le dispositif de freinage (70) à réduire la force de freinage lorsque la manipulation de la partie de manipulation de freinage (7f) est interrompue pendant la décélération du véhicule à selle (1).
